# EUROPÄISCHE PATENTANMELDUNG

(11) **EP 1 182 515 A2**
(43) Veröffentlichungstag der Anmeldung: **27.02.2002**
(21) Anmeldenummer: 01117672.4
(22) Anmeldetag: 26.07.2001
(51) Int. Cl.: G03G 15/00

(54) **Bilderzeugungsvorrichtung mit einem Impulsdensitometer**

(30) Priorität: 15.08.2000 US 225486 P; 14.12.2000 US 737320
(71) Anmelder: Heidelberger Druckmaschinen Aktiengesellschaft, 69115 Heidelberg (DE)
(72) Erfinder: Friedrich, Kenneth P., Honeoye, NY 14471 (US); Hameiste, William A., Penfield, NY 14526 (US)
(74) Vertreter: Franzen, Peter

(57) **Zusammenfassung**

Die Erfindung sieht eine Bilderzeugungsvorrichtung (100) mit einem Impulsdensitometer (160) vor, die die Bildung von Artefakten auf elektrofotografischen Filmen vermeidet. Die Bilderzeugungsvorrichtung (100) kann einen Lader (118), eine Belichtungsvorrichtung (120), eine Tonerstation (125), einen Übertragungslader (130), eine Fixierstation (140) und ein Densitometer (160) umfassen, die um einen Fotoleiter (105) herum angeordnet sind. Das Densitometer (160) kann mit einem Emitter (165), einem Kollektor (170) und einer Impulseinrichtung (180) ausgestattet sein. Das Densitometer (160) erzeugt einen oder mehrere Impulse, um die Tonerdichte und die Fotoleiterdichte zu messen. Die Impulsstrahlung liegt wesentlich unterhalb der Belichtungsschwelle von elektrofotografischen Filmen, insbesondere von Filmen, die im Infrarotbereich des Spektrums empfindlich sind.

## Beschreibung

Die Erfindung betrifft Bilderzeugungsvorrichtungen mit Densitometern. Insbesondere betrifft die vorliegende Erfindung elektrofotografische Bilderzeugungsvorrichtungen mit Online-Densitometern.

Elektrofotografische (EP) Bilderzeugungsvorrichtungen dienen dazu, Bilder auf Papier oder andere Medien zu übertragen. Eine elektrofotografische Bilderzeugungsvorrichtung umfasst normalerweise einen Fotoleiter mit einem Film, der sich elektrostatisch aufladen und optisch belichten lässt, um ein elektrostatisches Latentbild auf der Oberfläche auszubilden. Auf den Fotoleiter wird Toner aufgetragen. Der Toner wird aufgeladen und haftet dadurch an der Oberfläche des Fotoleiters in den Bereichen, die dem elektrostatischen Latentbild entsprechen. Das Tonerbild wird auf Papier oder ein anderes Medium übertragen. Das Papier wird erwärmt, um den Toner auf dem Papier zu fixieren. Zur Vorbereitung für ein weiteres Bild wird der Fotoleiter dann aufgefrischt, d.h. jegliche Toner- und Ladungsreste werden beseitigt.

Viele elektrofotografische Bilderzeugungsvorrichtungen sind zur Unterstützung des Betriebs und Steuerung des Bilderzeugungsverfahrens mit einem Densitometer ausgestattet. Das Densitometer ermittelt die Dichte des Toners auf dem Fotoleiter, um eine entsprechende Anpassung der Betriebsparameter vornehmen zu können. Das Densitometer ist typischerweise ein Durchlichtdensitometer, das einen Emitter und einen Kollektor an gegenüberliegenden Seiten des Fotoleiters umfasst. Der Emitter kann aus einem GaAlAs-Chip mit einer Wellenlänge von ca. 880 nm bestehen. Der optische Strahlengang zwischen Emitter und Kollektor führt durch den Fotoleiter und durch den ggf. darauf befindlichen Toner. Das Densitometer zeigt einen Spannungswert an, der der Menge der Lichtenergie entspricht, die vom Emitter zum Kollektor übertragen wird. Der Spannungswert entspricht zudem der Dichte des Fotoleiters und des ggf. darauf befindlichen Toners.

Das Densitometer arbeitet normalerweise in Verbindung mit einem Prozessfeld, das auf der Oberfläche des Fotoleiters in einem zwischen den Bildfeldern befindlichen Bereich angeordnet ist Während des Betriebs der elektrofotografischen Bilderzeugungsvorrichtung wird das Prozessfeld geladen, belichtet und entwickelt, um die maximale Tonerdichte auf dem Prozessfeld zu erzeugen. Das Densitometer gibt die Dichte im Prozessfeld an sowie die Dichte an einer Stelle auf dem Fotoleiter, die nicht mit Toner beaufschlagt ist und benachbart zum Prozessfeld und außerhalb der Bildfelder angeordnet ist. Der Spannungswert des Fotoleiters ohne Toner wird vom Spannungswert des Prozessfeldes (Fotoleiter und Toner) subtrahiert, um die Dichte des Toners auf dem Fotoleiterprozessfeld zu errechnen.

Fotoleiter umfassen typischerweise drei Schichten, eine untere Trägerschicht aus Polyester oder einem ähnlichen Material, eine mittlere Leitschicht sowie eine äußere elektrografische Schicht. Im weiteren werden diese Fotoleiter auch als Film bezeichnet. Ältere Filmkonstruktionen sind optisch und elektrostatisch empfindlich, jedoch im wesentlichen nicht gegenüber dem Infrarotspektrum. Emitter und Kollektor arbeiten typischerweise im Infrarotbereich des Spektrums, weshalb diese älteren Filme gegenüber den Emissionen des Densitometers relativ undurchlässig sind. Obwohl diese Filme in gewisser Weise auf das Densitometer ansprechen, lässt sich die daraus resultierende Wirkung auf dem Ausgabebild praktisch nicht wahrnehmen.

Jüngere Filmkonstruktionen sprechen auf die zur Zeit gebräuchlichen Densitometer an. Neuere Filme sind im Infrarotspektrum empfindlich. Da Densitometer auf Infrarotstrahlen ansprechen, können die Emitter Artefakte verursachen, also unterwünschte Bilder, die auf neueren Filmen und dementsprechend auch auf den von der Vorrichtung ausgegebenen Bildern sichtbar sind. Die Artefakte nehmen unterschiedliche Formen an. Im Allgemeinen erzeugen Densitometer allerdings zwei Arten von Artefakten. Die erste Art von Artefakt erscheint als kleiner dunkler Punkt auf dem Ausgabebild. Wenn eine Bilderzeugungsvorrichtung stoppt, belichtet (beschädigt) das Densitometer den Film in Form eines kleinen Punktes. Die zweite Art von Artefakt erscheint in dem Ausgabebild als dunkle Linie. Bei laufendem Betrieb belichtet (beschädigt) das Densitometer den Film entlang einer durchlaufenden Linie. Artefakte sind im Sinne einer guten Bildqualität nicht tolerierbar. Diese Artefakte sind zwar normalerweise nicht dauerhaft, allerdings werden mehrere "Auffrischzyklen" benötigt, um sie zu beseitigen. Um Artefakte zu vermeiden, sind Emitter und Kollektor mit längerer Wellenlänge einsetzbar, um eine Belichtung des Films zu verhindern. Allerdings sind diese Dioden ggf. wesentlich teurer als die derzeit verwendeten Dioden.

Der Erfindung liegt die Aufgabe zugrunde, eine Bilderzeugungsvorrichtung mit einem Densitometer zu schaffen, die die Bildung von Artefakten auf elektrofotografischem Film vermeidet.
Nach einem Aspekt der Erfindung umfasst die Bilderzeugungsvorrichtung einen Fotoleiter mit einem Film, der eine Belichtungsschwelle aufweist. Ein oder mehrere Lader, eine Belichtungsvorrichtung, eine Tonerstation sowie eine Dichtemessvorrichtung sind benachbart zum Fotoleiter angeordnet. Der oder die Lader beaufschlagen den Film mit einer elektrostatischen Ladung. Die Belichtungsvorrichtung belichtet den Film optisch und erzeugt auf dem Film ein elektrostatisches Bild. Die Tonerstation trägt Toner auf dem Film auf. Der Toner ist derart geladen, dass er an dem elektrostatischen Bild haftet. Die Dichtemessvorrichtung erzeugt ein oder mehrere Impulse, um die Tonerdichte, die Fotoleiterdichte oder eine Kombination aus den Toner- und Fotoleiterdichten zu messen.
Die Impulse sind wesentlich kleiner als die Belichtungsschwelle des Films.

Nach einem weiteren Aspekt der Erfindung umfasst die Bilderzeugungsvorrichtung einen Fotoleiter mit einem Film, der eine Belichtungsschwelle aufweist. Ein oder mehrere Lader, eine Belichtungsvorrichtung, eine Tonerstation sowie ein Densitometer sind benachbart zum Fotoleiter angeordnet. Der oder die Lader beaufschlagen den Film mit einer elektrostatischen Ladung. Die Belichtungsvorrichtung belichtet den Film optisch und erzeugt auf dem Film ein elektrostatisches Bild. Die Tonerstation trägt Toner auf dem Film auf. Der Toner ist derart geladen, dass er an dem elektrostatischen Bild haftet. Das Densitometer ist mit einem Emitter, einem Kollektor und einer Impulseinrichtung ausgestattet. Emitter und Kollektor sind sich gegenüberliegend und benachbart zum Fotoleiter angeordnet. Der Emitter erzeugt in Ansprechen auf ein Ansteuersignal einen oder mehrere Impulse. Der oder die Impulse sind wesentlich kleiner als die Belichtungsschwelle des Films. Der oder die Impulse messen die Tonerdichte, die Fotoleiterdichte oder eine Kombination aus der Toner- und Fotoleiterdichte. Die Impulseinrichtung ist derart verbunden, dass sie dem Emitter das Ansteuersignal gemäß einem Arbeitszyklus bereitstellt.

Nach einem weiteren Aspekt der Erfindung umfasst ein Online-Densitometer für eine Bilderzeugungsvorrichtung einen Emitter, einen Kollektor und eine Impulseinrichtung. Der Emitter erzeugt gemäß einem Ansteuersignal einen oder mehrere Impulse. Der Kollektor ist derart angeordnet, dass er von dem Emitter über einen Strahlengang einen oder mehrere Impulse empfängt. Die Impulseinrichtung ist derart verbunden, dass sie dem Emitter das Ansteuersignal gemäß einem Arbeitszyklus bereitstellt.

Fachleute werden bei der Betrachtung der folgenden Figuren und beim Lesen der detaillierten Beschreibung andere Vorrichtungen, Verfahren, Merkmale und Vorteile der Erfindung erkennen. Die vorliegende Beschreibung bezieht diese zusätzlichen Vorrichtungen, Verfahren, Merkmale und Vorteile mit ein. Sie sind Gegenstand der vorliegenden Erfindung und fallen in den Schutzbereichs der anliegenden Ansprüche.

Die Erfindung wird im folgenden anhand in der Zeichnung dargestellter Ausführungsbeispiele näher erläutert. Es zeigen:
- Fig. 1: eine schematische Darstellung einer elektrofotografischen Bilderzeugungsvorrichtung mit einem Online-Impulsdensitometer gemäß einem Ausführungsbeispiel der Erfindung.
- Fig. 2: ein Blockdiagramm eines Online-Impulsdensitometers gemäß einem Ausführungsbeispiel der Erfindung.
- Fig. 3: eine Kurve der von einem Online-Densitometer zum Messen der Dichte verwendeten Spannungssignale gemäß einem Ausführungsbeispiel der Erfindung.

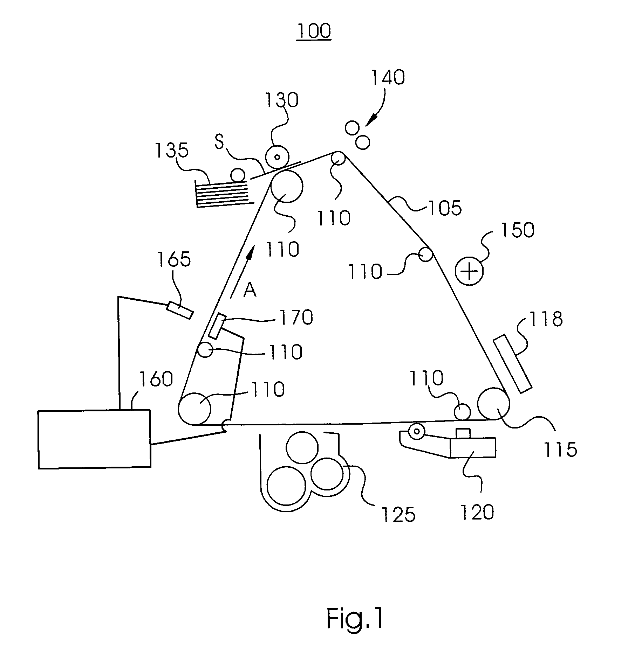

Fig. 1 zeigt eine elektrofotografische (EP) Bilderzeugungsvorrichtung 100 mit einem Impulsdensitometer gemäß einem Ausführungsbeispiel der Erfindung. Ein Fotoleiter 105 ist auf Tragwalzen 110 und einer motorbetriebenen Antriebswalze 115 angeordnet, die den Fotoleiter 105 in die durch Pfeil A bezeichnete Richtung transportiert. Ein primärer Lader 118, eine Belichtungsvorrichtung 120, eine Tonerstation 125, ein Übertragungslader 130, eine Fixierstation 140 und ein Reiniger 150 sind in Wirkbeziehung um den Fotoleiter 105 herum angeordnet. Ein Densitometer 160 ist mit einem Emitter 165 und einem Kollektor 170 ausgestattet, die sich gegenüberliegen, wobei der Fotoleiter 105 sich zwischen beiden befindet. Nach einem Aspekt der Erfindung umfasst der Fotoleiter 105 eine walzengelagerte Bandkonfiguration. Der Fotoleiter 105 kann jedoch auch auf einer Trommel oder einer anderen geeigneten Konfiguration angeordnet sein. Zwar wird für die elektrofotografische Bilderzeugungsvorrichtung 100 eine bestimmte Konfiguration und Anordnung gezeigt, aber die Erfindung kann andere Konfigurationen und Anordnungen verwenden, u.a. Anordnungen mit weniger oder mehr Komponenten.

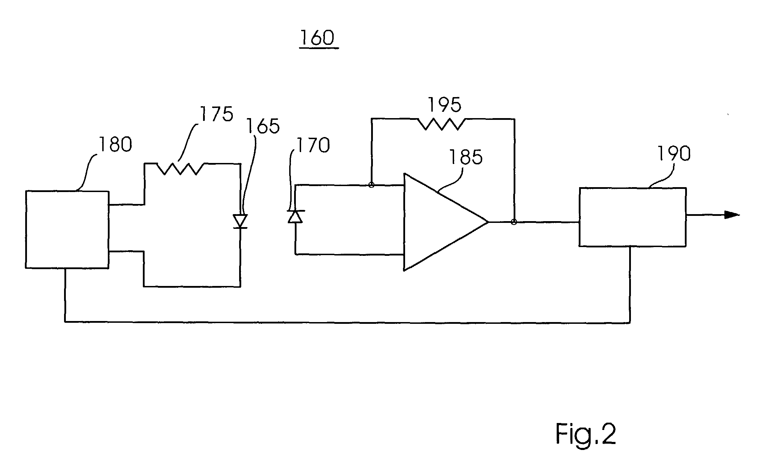

Fig. 2 zeigt ein Blockdiagramm des Densitometers 160 gemäß einem Ausführungsbeispiel der Erfindung. Der Emitter 165 kann eine im Infrarotbereich abstrahlende Diode sein (IRED), die mit einem Widerstand 175 und einem Impulsoszillator 180 verbunden ist. Der Emitter kann auch eine Leuchtdiode (LED) sein. Nach einem Aspekt ist der Emitter 165 durch den Widerstand 175 strombegrenzt und wird durch den Impulsoszillator 180 angesteuert. Der Kollektor 170 ist mit einem Operationsverstärker 185 verbunden, der mit einem Widerstand 195 einen Regelkreis bildet. Der Kollektor 170 kann eine Siliziumfotodiode oder eine andere Fotodiode sein. Das Densitometer kann ein Durchlichtdensitometer, ein Auflichtdensitometer oder eine andere Dichtemessvorrichtung sein.

Zwar wird für den Impulsoszillator 180 eine bestimmte Impulsvorrichtung und -anordnung beschrieben, aber andere Impulsvorrichtungen und -anordnungen sind ebenfalls verwendbar, um den Arbeitszyklus des Densitometers für den Film zu erzeugen. Der Emitter 165 kann mit einer (nicht gezeigten) Sperrvorrichtung oder einem Verschluss ausgestattet sein, der Strahlungen vom Emitter 165 in Ansprechen auf den Arbeitszyklus sperrt und freigibt.

Der Emitter 165 und der Kollektor 170 können derart konfiguriert sein, dass sie mit dem auf dem Fotoleiter 105 verwendeten Filmtyp arbeiten. Indem der Emitter 165 unterhalb der Belichtungsschwelle des Films gepulst wird, bewirkt die Strahlungsmenge des Emitters 165 ggf. keine wesentliche Belichtung des Films, obwohl der Film möglicherweise infrarot- oder farbempfindlich ist. Bei dem Film kann es sich um einen beliebigen Film handeln, der in elektrofotografischen Bilderzeugungsvorrichtungen Verwendung findet. Der Film kann gegenüber der Wellenlänge des Emitters 165 empfindlich sein. Der Film kann gegenüber Farbe (sichtbares Licht), dem Infrarotspektrum und gegenüber anderen elektromagnetischen Strahlungen empfindlich sein.

Arbeitszyklus, Wellenlänge und andere Merkmale des Emitters 165 und des Kollektors 170 können derart gewählt sein, dass Artefakte auf dem Film vermieden werden. Obwohl nachfolgend bestimmte Konfigurationen beschrieben werden, u.a. bestimmte Wellenlängen und Arbeitszyklen, sind auch andere Konfigurationen mit anderen Wellenlängen und Arbeitszyklen zur Vermeidung von Artefakten verwendbar.

Der Emitter 165 kann mit beliebiger Wellenlänge abstrahlen, solange die Emissionen im wesentlichen unterhalb der Belichtungsschwelle des Films liegen. Nach einem Aspekt ist die Wellenlänge des Emitters 165 nach der Länge der Impulse oder des Arbeitszyklus gewählt. Nach einem anderen Aspekt werden (nicht gezeigte) Emitter mit größerer Wellenlänge in Verbindung mit längeren Impulsen oder größeren Arbeitszyklen verwendet. Der Emitter 165 kann aus GaAIAs oder einem anderen geeigneten Material bestehen.

Im vorliegenden Ausführungsbeispiel ist der Emitter 165 eine im Infrarotbereich abstrahlende Diode (IRED). Die Wellenlänge des Emitters 165 kann gleich oder größer als ca. 880 nm sein. Nach einem Aspekt liegt die Wellenlänge des Emitters im Bereich von ca. 940 nm bis ca. 950 nm. Der Emitter 165 kann auch eine kürzere Wellenlänge aufweisen, sogar eine Wellenlänge innerhalb des Bereichs des sichtbaren Lichts. Wenn die Wellenlänge im Bereich des sichtbaren Lichts liegt, kann der Emitter 165 eine Leuchtdiode (LED) sein.

Im vorliegenden Ausführungsbeispiel sind der Impulsoszillator 180 und der Operationsverstärker 185 mit einer Abtast-Halte-Schaltung 190 verbunden, bei der es sich um eine integrierte Schaltung (IC) handeln kann. Die Abtast-Halte-Schaltung 190 kann an eine (nicht gezeigte) Steuereinrichtung angeschlossen sein, etwa die Schalt- und Steuereinheit (LCU) oder an einen anderen Mikroprozessor der elektrofotografischen Bilderzeugungsvorrichtung 100. Die Abtast-Halte-Schaltung 190 übergibt der Schalt- und Steuereinheit (LCU) einen Spannungswert, der der Dichte des ausgelesenen Bereichs auf dem Fotoleiter 105 entspricht.

Im Betrieb strahlt der Emitter 165 Impulse in Ansprechen auf ein Ansteuersignal ab, das durch den Impulsoszillator 180 erzeugt wird. Das Ansteuersignal aktiviert und deaktiviert den Emitter 165 gemäß dem Arbeitszyklus. Der Kollektor oder die Fotodiode 170 sind aktiv und können ggf. ständig aktiv sein, um eingehende Impulsemissionen des Emitters 165 zu empfangen. Die Fotodiode 170 empfängt die durch den Fotoleiter 105 hindurch tretenden Impulse. Der Operationsverstärker 185 legt in Ansprechen auf die von der Fotodiode 170 empfangenen Impulse ein verstärktes Ausgangssignal an die Abtast-Halte-Schaltung 190 an. Das verstärkte Ausgangssignal entspricht der Dichte des Fotoleiters 105 und eines vorhandenen Toners. Nach einem Aspekt wird die Dichte eines (nicht gezeigten) Prozessfeldes gemessen. Ggf. werden auch andere Bereiche und Dichten gemessen.

Der Betrieb des Emitters 165 kann mit dem Betrieb der Abtast-Halte-Schaltung 190 synchronisiert sein. Zu Beginn eines Impulses können Zeitverzögerungen auftreten, die auf das Aktivieren des Ansteuersignals, das Starten der Impulsemission und des Impulsempfangs und das Erzeugen des verstärkten Ausgabesignals zurückzuführen sind. Diese Zeitverzögerungen treten während einer Anstiegszeit nach Beginn des Ansteuersignals oder des Impulses auf. Auch zum Ende eines Impulses können Zeitverzögerungen auftreten, die auf das Deaktivieren des Ansteuersignals, das Beenden der Impulsemission und des Impulsempfangs und das Abbauen des verstärkten Ausgabesignals zurückzuführen sind. Diese Zeitverzögerungen treten während einer Abfallzeit nach Ende des Ansteuersignals oder des Impulses auf. Das Anliegen des verstärkten Ausgabesignals während der Anstiegs- und Abfallzeiten kann die Genauigkeit der Dichtemessung beeinträchtigen. Um die Auswirkung der Anstiegs- und Abfallzeiten auf die Dichtemessung zu mindern oder beseitigen, erzeugt der Impulsoszillator 180 ein Synchronisationssignal für die Abtast-Halte-Schaltung 190. Das Synchronisationssignal verriegelt die Impulse von dem Emitter 165 mit einer Haltefunktion der Abtast-Halte-Schaltung 190.

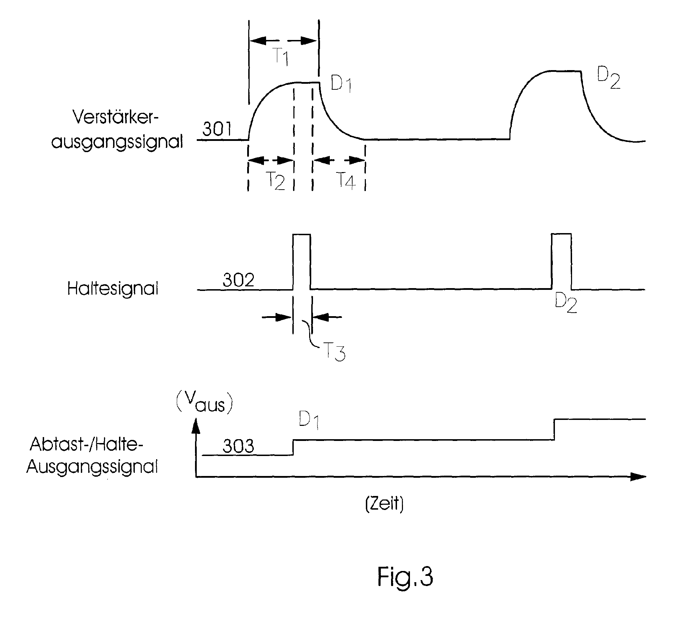

Fig. 3 zeigt eine Kurve der Spannungssignale, die von einem Online-Densitometer zur Messung der Dichte verwendet werden sowie die Synchronisation des Emitters 165 und der Abtast-Halte-Schaltung 190 gemäß einem Ausführungsbeispiel. Der Impulsoszillator 180 erzeugt ein Ansteuersignal zur Messung einer ersten Dichte D₁. Das Ansteuersignal veranlasst den Emitter 165, einen Impuls während der Zeitdauer T₁ abzustrahlen. Der Kollektor oder die Fotodiode 170 empfangen die eingehende Impulsemission, worauf von dem Operationsverstärker 185 ein verstärktes Ausgangssignal 301 an die Abtast-Halte-Schaltung 190 angelegt wird. Der Spannungspegel des verstärkten Ausgangssignals 301 kann eine Funktion der Dichte sein. Nach einem Aspekt steht das verstärkte Ausgangssignal 301 in umgekehrter Beziehung zur Dichte. Nach diesem Aspekt bezeichnet ein höherer Spannungswert eine niedrigere Dichte als ein niedriger Spannungswert. Wenn die Dichte ansteigt (wie anhand des von dem Kollektor 170 empfangenen Lichts gemessen), fällt der Spannungswert also ab.

In Ansprechen auf das Synchronisationssignal vom Impulsoszillator 180 tastet die Abtast-Halte-Schaltung 190 das verstärkte Ausgangssignals 301 während einer Abtastzeit T₃ ab, um ein Haltesignal 302 zu ermitteln. Die Abtastzeit T₃ liegt hinter der Anstiegszeit T₂, jedoch vor der Abfallzeit T₄. Das Haltesignal 302 entspricht während der Abtastzeit T₃ der ersten Dichte D₁.

Die Abtast-Halte-Schaltung 190 legt ein Abtast-Halte-Ausgangssignal 303 an die Schalt- und Steuereinheit (LCU) an. Die Abtast-Halte-Schaltung 190 hält das Abtast-Halte-Ausgangssignal 303 auf dem Wert des Haltesignals 302, das während der Zeitdauer T₃ ermittelt wurde, bis die nächste Dichtemessung erfolgt. Die Dichtemessung des zweiten Dichtewerts D₂ erfolgt auf die gleiche Weise wie die Dichtemessung des ersten Dichtewerts D₁. Der zweite Dichtewert D₂ kann kleiner als der erste Dichtewert D₁ sein (d.h. das verstärkte Ausgangssignal 301 hat eine höhere Spannung bei D₂ als bei D₁). Entsprechend ist das Abtast-Halte-Ausgangssignal für den zweiten Dichtewert D₂ höher als für den ersten Dichtewert D₁. Die Abtast-Halte-Schaltung 190 hält das Abtast-Halte-Ausgangssignal 303 bis zur nächsten Dichtemessung auf diesem höheren Wert. Zwar ist der zweite Dichtewert D₂ in der Darstellung höher als der erste Dichtewert D₁, aber der zweite Dichtewert D₂ kann höher als der erste Dichtewert sein, wenn der Fotoleiter mit der maximalen Tonermenge beaufschlagt ist. Das Abtast-Halte-Ausgangssignal 303 kann abfallen und eine Spannung von null Volt erreichen. Der Arbeitszyklus kann zudem die Zeitsteuerung der Dichtemessungen für den ersten und zweiten Dichtewert D₁ bzw. D₂ steuern.

Der Arbeitszyklus stellt die zeitliche Dauer eines Impulses vom Emitter 165 dar. Der Arbeitszyklus ist je nach spektralem Ansprechverhalten des Films auf dem Fotoleiter 105 wählbar. Jeder Film weist einen Belichtungsschwellenwert auf, der die Zeitspanne umfasst, wenn ein Impuls beginnt, einen Artefakt zu erzeugen oder tatsächlichen einen Artefakt erzeugt oder eine Schleierbildung auf dem Film erzeugt. In einem Ausführungsbeispiel ist der Arbeitszyklus kleiner als der Belichtungsschwellenwert des Films. Nach einem Aspekt ist der Arbeitszyklus gleich oder kleiner als ca. fünf Prozent.

Der Arbeitszyklus ist zudem je nach "Einschwingzeit" der Abtast-Halte-Schaltung 190 wählbar. Die Einschwingzeit ist die Zeit, die die Abtast-Halte-Schaltung 190 benötigt, um ein geeignetes Haltesignal 302 zu ermitteln. Die Einschwingzeit umfasst die Anstiegszeit T₂ und die Abtastzeit T₃ und kann zudem die Abfallzeit T₄ umfassen. Die Anstiegszeit T₂ lässt sich durch Wahl geeigneter Komponenten für das Densitometer 160, wie den Emitter 165, den Kollektor 170, den Operationsverstärker 185 und andere Komponenten, verkürzen oder im wesentlichen ganz beseitigen. Bei geeigneter Wahl der Komponenten kann die Einschwingzeit im wesentlichen gleich der Abtastzeit T₃ sein. Die Abtastzeit T₃ lässt sich ebenfalls durch Wahl geeigneter Komponenten verkürzen. Der Arbeitszyklus kann gleich oder größer als die Einschwingzeit sein. Nach einem Aspekt ist der Arbeitszyklus gleich oder größer als ein Prozent.

Der Arbeitszyklus kann im Bereich von ca. einem Prozent bis ca. fünf Prozent liegen. Wenn der Emitter 165 eine Infrarotdiode (IRED) ist, liegt der Temperaturanstieg der Infrarotdiode 165 möglicherweise nicht wesentlich innerhalb dieses Bereichs. Der Arbeitszyklus kann durch Anweisungen in der Abtast-Halte-Schaltung 190, durch einen Mikroprozessor oder durch eine Steuervorrichtung, wie die Schalt- und Steuereinheit (LCU) 131, vorgegeben sein. Der Arbeitszyklus lässt sich ggf. durch die Abtast-Halte-Schaltung 190, die Schalt- und Steuereinheit (LCU) 131, einen anderen Mikroprozessor usw. abstimmen, einstellen und ändern. In Verbindung mit einem einstellbaren Arbeitszyklus kann die elektrofotografische Bilderzeugungsvorrichtung 100 verschiedene Filmarten verwenden.

Obwohl die Erfindung mit besonderem Bezug auf bevorzugte Ausführungsbeispiele beschrieben wurde, ist die Erfindung nicht darauf beschränkt, sondern es können innerhalb des Schutzbereichs der nachstehenden Ansprüche Änderungen und Abwandlungen vorgenommen werden.

### Bezugszeichen

- 100: elektrofotografische (EP) Bilderzeugungsvorrichtung
- 105: Fotoleiter
- 110: Tragwalzen
- 115: Antriebswalze
- 118: primärer Lader
- 120: Belichtungsvorrichtung
- 125: Tonerstation
- 130: Übertragungslader
- 140: Fixierstation
- 150: Reiniger
- 160: Densitometer
- 165: Emitter
- 170: Kollektor
- 175: Widerstand
- 180: Impulsoszillator
- 185: Operationsverstärker
- 190: Abtast-Halte-Schaltung
- 195: Widerstand
- 301: verstärktes Ausgangssignal
- 302: Haltesignal
- 303: Abtast-Halte-Ausgangssignal

## Patentansprüche

1. Bilderzeugungsvorrichtung mit:
einem Fotoleiter (105) mit einer Oberflächenschicht, die eine Belichtungsschwelle aufweist;
mindestens einem Lader, der in Wirkbeziehung zu einem Fotoleiter (105) angeordnet ist, um die Oberflächenschicht elektrostatisch zu laden;
einer Belichtungsvorrichtung (120), die in Wirkbeziehung zu einem Fotoleiter (105) angeordnet ist, um die Belichtungsvorrichtung optisch zu belichten und auf der Oberflächenschicht ein elektrostatisches Bild auszubilden;
einer Tonerstation (125), die in Wirkbeziehung zu einem Fotoleiter (105) angeordnet ist, um Toner auf die Oberflächenschicht aufzutragen, wobei der Toner derart geladen ist, dass er an dem elektrostatischen Bild haftet; und
einer Dichtemessvorrichtung (160), die in Wirkbeziehung zu einem Fotoleiter (105) angeordnet ist, um mindestens einen Impuls zum Messen mindestens einer Tonerdichte und einer Fotoleiterdichte zu erzeugen, wobei der mindestens eine Impuls wesentlich kleiner ist als die Belichtungsschwelle der Oberflächenschicht.

2. Bilderzeugungsvorrichtung nach Anspruch 1,
**dadurch gekennzeichnet,**
**dass** die Dichtemessvorrichtung (160) einen Emitter (165) und einen Kollektor (170) umfasst, welche auf entgegengesetzten Seiten des Fotoleiters einander gegenüber angeordnet sind.

3. Bilderzeugungsvorrichtung nach Anspruch 2,
**dadurch gekennzeichnet,**
**dass** der Emitter (165) und der Kollektor (170) einen optischen Strahlengang umfassen, der durch den Fotoleiter (105) führt.

4. Bilderzeugungsvorrichtung nach Anspruch 1,
**dadurch gekennzeichnet,**
**dass** die Dichtemessvorrichtung ein Densitometer (160) ist mit:
einem gegenüber dem Fotoleiter (105) angeordneten Emitter (165), wobei der Emitter mindestens einen Impuls in Ansprechen auf ein Ansteuersignal erzeugt, und wobei der mindestens eine Impuls wesentlich kleiner als die Belichtungsschwelle des Films ist und wobei der mindestens eine Impuls zum Messen mindestens einer Tonerdichte oder einer Fotoleiterdichte dient,
einem gegenüber dem Emitter (165) angeordneten Kollektor (170),
einer mit dem Emitter (165) verbundenen Impulseinrichtung, die das Ansteuersignal in Ansprechen auf einen Arbeitszyklus an den Emitter anlegt.

5. Bilderzeugungsvorrichtung nach Anspruch 4,
**dadurch gekennzeichnet,**
**dass** das Densitometer (160) ein Durchlichtdensitometer ist.

6. Bilderzeugungsvorrichtung nach Anspruch 2 oder 4,
**dadurch gekennzeichnet,**
**dass** der Emitter (165) eine Wellenlänge aufweist, die gleich oder größer als ca. 880 nm ist.

7. Bilderzeugungsvorrichtung nach Anspruch 2 oder 4,
**dadurch gekennzeichnet,**
**dass** der Emitter (165) eine Wellenlänge aufweist, die im Bereich von ca. 940 nm bis ca. 950 nm liegt.

8. Bilderzeugungsvorrichtung nach Anspruch 2 oder 4,
**dadurch gekennzeichnet,**
**dass** der Emitter (165) eine Wellenlänge aufweist, die im Bereich des sichtbaren Lichts liegt.

9. Bilderzeugungsvorrichtung nach Anspruch 2,
**dadurch gekennzeichnet,**
**dass** die Dichtemessvorrichtung (160) zudem eine mit dem Emitter (165) verbundene Impulseinrichtung umfasst, wobei die Impulseinrichtung gemäß einem Arbeitszyklus ein Ansteuersignal an den Emitter anlegt und wobei der Emitter den mindestens einen Impuls in Ansprechen auf das Ansteuersignal erzeugt.

10. Bilderzeugungsvorrichtung nach Anspruch 9,
**dadurch gekennzeichnet,**
**dass** die Impulseinrichtung ein Impulsoszillator (180) ist.

11. Bilderzeugungsvorrichtung nach Anspruch 2,
**dadurch gekennzeichnet,**
**dass** die Dichtemessvorrichtung (160) zudem eine Verschlussvorrichtung umfasst, die zwischen dem Emitter (165) und dem Fotoleiter (105) angeordnet ist, wobei die Verschlussvorrichtung den Fotoleiter gemäß einem Arbeitszyklus gegen den Emitter abschirmt.

12. Bilderzeugungsvorrichtung nach Anspruch 2 oder 4,
**dadurch gekennzeichnet,**
**dass** der Emitter (165) eine Infrarotdiode umfasst.

13. Bilderzeugungsvorrichtung nach Anspruch 2 oder 4,
**dadurch gekennzeichnet,**
**dass** der Emitter (165) eine Leuchtdiode umfasst.

14. Bilderzeugungsvorrichtung nach Anspruch 2 oder 4,
**dadurch gekennzeichnet,**
**dass** der Kollektor (170) eine Fotodiode umfasst.

15. Bilderzeugungsvorrichtung nach Anspruch 14,
**dadurch gekennzeichnet,**
**dass** die Fotodiode eine Siliziumfotodiode ist.

16. Bilderzeugungsvorrichtung nach Anspruch 4 oder 9,
**dadurch gekennzeichnet,**
**dass** die Dichtemessvorrichtung (160) zudem eine Abtast-Halte-Schaltung (190) umfasst, die in Wirkbeziehung mit der Impulseinrichtung und dem Kollektor (170) verbunden ist, und wobei die Abtast-Halte-Schaltung (190) ein Synchronisationssignal von der Impulseinrichtung empfängt, um ein Ausgangssignal von dem Kollektor (170) in Ansprechen auf das Synchronisationssignal abzutasten.

17. Bilderzeugungsvorrichtung nach Anspruch 16,
**dadurch gekennzeichnet,**
**dass** die Abtast-Halte-Schaltung (190) das Ausgabesignal nach einer Anstiegszeit des mindestens einen Impulses abtastet.

18. Bilderzeugungsvorrichtung nach Anspruch 16 mit weiterhin einer Steuereinrichtung,
**dadurch gekennzeichnet,**
**dass** die Abtast-Halte-Schaltung (190) der Steuereinrichtung ein Ausgabesignal bereitstellt.

19. Bilderzeugungsvorrichtung nach Anspruch 16,
**dadurch gekennzeichnet,**
**dass** die Abtast-Halte-Schaltung (190) eine integrierte Schaltung ist.

20. Bilderzeugungsvorrichtung nach Anspruch 1,
**dadurch gekennzeichnet,**
**dass** die Dichtemessvorrichtung einen Arbeitszyklus aufweist, der gleich oder kleiner als ca. fünf Prozent ist.

21. Bilderzeugungsvorrichtung nach Anspruch 1,
**dadurch gekennzeichnet,**
**dass** die Dichtemessvorrichtung einen Arbeitszyklus aufweist, der gleich oder größer als ca. ein Prozent ist.

22. Bilderzeugungsvorrichtung nach Anspruch 1 oder 4,
**dadurch gekennzeichnet,**
**dass** die Oberflächenschicht mindestens infrarot- oder farbempfindlich ist.

23. Bilderzeugungsvorrichtung nach Anspruch 1,
**dadurch gekennzeichnet,**
**dass** die Oberflächenschicht zudem ein Prozessfeld umfasst, und dass mindestens die Tonerdichte oder die Fotoleiterdichte aus dem Prozessfeld stammt.

24. Bilderzeugungsvorrichtung nach Anspruch 4,
**dadurch gekennzeichnet,**
**dass** der Arbeitszyklus im Bereich von ca. einem Prozent bis ca. fünf Prozent liegt

25. Bilderzeugungsvorrichtung nach Anspruch 4,
**dadurch gekennzeichnet,**
**dass** die Oberflächenschicht zudem ein Prozessfeld umfasst, und dass das Densitometer (160) die Tonerdichte auf dem Prozessfeld ermittelt.

26. Online-Densitometer für eine Bilderzeugungsvorrichtung mit:
einem Emitter (165), der gemäß einem Ansteuersignal mindestens einen Impuls erzeugt;
einem Kollektor (170), der den mindestens einen Impuls über einen optischen Strahlengang mit dem Emitter (165) empfängt; und
einer Impulseinrichtung, die derart verbunden ist, dass sie dem Emitter (165) ein Ansteuersignal gemäß einem Arbeitszyklus bereitstellt.

27. Online-Densitometer nach Anspruch 26 mit einer Abtast-Halte-Schaltung (190), die mit dem Kollektor (170) und der Impulseinrichtung verbunden ist, und die von dem Kollektor in Ansprechen auf ein Synchronisationssignal von der Impulsvorrichtung ein Ausgabesignal abtastet.

28. Online-Densitometer nach Anspruch 27,
**dadurch gekennzeichnet,**
**dass** die Abtast-Halte-Schaltung (190) das Ausgabesignal nach einer Anstiegszeit des mindestens einen Impulses abtastet.

29. Online-Densitometer nach Anspruch 27,
**dadurch gekennzeichnet,**
**dass** die Abtast-Halte-Schaltung (190) eine integrierte Schaltung ist.

30. Online-Densitometer nach Anspruch 27 mit einem Verstärker (185), der in Wirkbeziehung mit dem Kollektor (170) und der Abtast-Halte-Schaltung (190) verbunden ist, wobei der Verstärker der Abtast-Halte-Schaltung (190) das Ausgabesignal von dem Kollektor (170) bereitstellt.

31. Online-Densitometer nach Anspruch 30,
**dadurch gekennzeichnet,**
**dass** der Verstärker (185) ein Operationsverstärker ist.

32. Online-Densitometer nach Anspruch 26,
**dadurch gekennzeichnet,**
**dass** der Emitter (165) eine Wellenlänge aufweist, die gleich oder größer als ca. 880 nm ist.

33. Online-Densitometer nach Anspruch 26,
**dadurch gekennzeichnet,**
**dass** der Emitter (165) eine Wellenlänge aufweist, die im Bereich von ca. 940 nm und ca. 950 nm liegt.

34. Online-Densitometer nach Anspruch 26,
**dadurch gekennzeichnet,**
**dass** der Emitter (165) eine Wellenlänge aufweist, die im Bereich des sichtbaren Lichts liegt.

35. Online-Densitometer nach Anspruch 26,
**dadurch gekennzeichnet,**
**dass** der Emitter (165) eine Infrarotdiode umfasst.

36. Online-Densitometer nach Anspruch 26,
**dadurch gekennzeichnet,**
**dass** der Emitter (165) eine Leuchtdiode umfasst.

37. Online-Densitometer nach Anspruch 26,
**dadurch gekennzeichnet,**
**dass** der Kollektor (170) eine Fotodiode umfasst.

38. Online-Densitometer nach Anspruch 37,
**dadurch gekennzeichnet,**
**dass** die Fotodiode eine Siliziumfotodiode ist.

39. Online-Densitometer nach Anspruch 26,
**dadurch gekennzeichnet,**
**dass** der Arbeitszyklus kleiner als eine Belichtungsgrenze eines Films für einen Fotoleiter ist.

40. Online-Densitometer nach Anspruch 26,
**dadurch gekennzeichnet,**
**dass** der Arbeitszyklus im Bereich von ca. einem Prozent bis ca. fünf Prozent liegt.
